# EUROPEAN PATENT APPLICATION

(11) **EP 4 749 451 A1**
(43) Date of publication of application: **27.05.2026**
(21) Application number: 24855821.5
(22) Date of filing: 20.08.2024
(51) Int. Cl.: G06F 9/50, G06F 15/78

(54) **COMPUTATIONAL RESOURCE ALLOCATION METHOD AND APPARATUS FOR FPGA DEVICE, AND FPGA DEVICE**

(30) Priority: 23.08.2023 CN 202311079647
(71) Applicant: ZTE CORPORATION, Shenzhen, Guangdong 518057 (CN)
(72) Inventor: WEI, Xing, Shenzhen, Guangdong 518057 (CN); TU, Yaofeng, Shenzhen, Guangdong 518057 (CN); HAN, Yinjun, Shenzhen, Guangdong 518057 (CN); CHEN, Zhenghua, Shenzhen, Guangdong 518057 (CN); DONG, Jing, Shenzhen, Guangdong 518057 (CN); GAO, Hong, Shenzhen, Guangdong 518057 (CN)
(74) Representative: Chimini, Francesco
(86) International application number: PCT/CN2024/113468
(87) International publication number: WO 2025/040099

(57) **Abstract**

Provided in the embodiments of the present disclosure are a computational resource allocation method and apparatus for an FPGA device, and an FPGA device. The method comprises: on the basis of a query request of a user, generating a heterogeneous query execution plan, wherein the heterogeneous query execution plan includes a heterogeneous operator and a non-heterogeneous operator; and on the basis of a computational throughput of processing the non-heterogeneous operator adjacent to the heterogeneous operator, and a computational throughput that a single resource block in a field-programmable gate array (FPGA) device can provide, determining a first number of resource blocks that are required to be allocated for executing the heterogeneous operator.

## Description

### Cross-Reference to Related Application

The present disclosure is based on and claims priority to Chinese patent application CN202311079647.3 filed on August 23, 2023 and entitled "Computational Resource Allocation Method and Apparatus for FPGA Device, and FPGA Device", the disclosure of which is incorporated herein by reference in its entirety.

### Technical Field

Embodiments of the present disclosure relate to the field of heterogeneous computing technologies, and in particular, to a computational resource configuration method and apparatus for a Field Programmable Gate Array (FPGA) device, and an FPGA device.

### Background

In related technologies, heterogeneous computing devices represented by FPGA are introduced into database systems to process specific query operators or query pipelines. To enable FPGA accelerators to better adapt to different query scenarios, some database systems adopt dynamic configuration strategies to manage a single FPGA device. However, the dynamic configuration scheme has the following problems. 1) Currently, the dynamic configuration scheme only configures the fixed-scale computing logic of specific operators onto the FPGA accelerator in real time based on query requirements. However, this configuration ignores the computational throughput of a Central Processing Unit (CPU) side when processing other operators, leading to a mismatch between the throughput of the FPGA device and that of the CPU, which prevents the rational utilization of resources of the FPGA device. 2) In the current dynamic configuration, additional time overhead is incurred during the configuration of the FPGA device and the use of the FPGA device. Therefore, the current dynamic configuration scheme is suitable for extremely complex query processing scenarios (i.e., minute-level). However, for some millisecond-level or even second-level queries, the time overhead for the configuration may prevent the FPGA query accelerator from executing acceleration tasks in a timely manner, thereby offsetting the acceleration benefits of the FPGA device and even causing negative net benefit.

### Summary

The embodiments of the present disclosure provide a computational resource configuration method and apparatus for an FPGA device, which may at least solve the problem in the current dynamic configuration schemes in the related art, where the throughput of the FPGA device does not match the computational throughput of the CPU, resulting in the failure to rationally utilize the resources of the FPGA device.

According to one or more embodiments of the present disclosure, provided is a computational resource configuration method for an FPGA device. The computational resource configuration method is applied to a host side of a database and includes: generating a heterogeneous query execution plan according to a query request of a user, wherein the heterogeneous query execution plan includes a heterogeneous operator and a non-heterogeneous operator; and determining, based on a computational throughput of processing the non-heterogeneous operator adjacent to the heterogeneous operator and a computational throughput that is able to be provided by a single chunk in an FPGA device, a first number of chunks required to be configured for executing the heterogeneous operator.

According to another embodiment of the present disclosure, provided is a computational resource configuration method for an FPGA device. The computational resource configuration method is applied to an FPGA side of a database and includes: configuring a first number of idle chunks in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk.

According to still another embodiment of the present disclosure, provided is a computational resource configuration apparatus for an FPGA device. The computational resource configuration apparatus includes: a generation module, configured to generate a heterogeneous query execution plan according to a query request of a user, wherein the heterogeneous query execution plan includes a heterogeneous operator and a non-heterogeneous operator; and a determination module, configured to determine, based on a computational throughput of processing the non-heterogeneous operator adjacent to the heterogeneous operator and a computational throughput that is able to be provided by a single chunk in an FPGA device, a first number of chunks required to be configured for executing the heterogeneous operator.

According to yet another embodiment of the present disclosure, provided is an FPGA device. The FPGA device includes: a configuration module, configured to configure a first number of idle chunks in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk.

According to yet another embodiment of the present disclosure, provided is a computer-readable storage medium. The computer-readable storage medium stores a computer program, wherein the computer program, when running, is configured to execute the operations in any one of the method embodiments.

According to yet another embodiment of the present disclosure, provided is an electronic device, including a memory and a processor, wherein the memory stores a computer program, and the processor is configured to run the computer program so as to execute the operations in any one of the method embodiments.

### Brief Description of the Drawings

Fig. 1 is a block diagram of a hardware structure of a computer terminal for running a computational resource configuration method for a field programmable gate array device according to one or more embodiments of the present disclosure;
Fig. 2 is a structural block diagram of a heterogeneous database system according to one or more embodiments of the present disclosure;
Fig. 3 is a flowchart of a computational resource configuration method for a field programmable gate array device according to one or more embodiments of the present disclosure;
Fig. 4 is a flowchart of a computational resource configuration method for a field programmable gate array device according to one or more embodiments of the present disclosure;
Fig. 5 is a structural block diagram of a computational resource configuration apparatus according to one or more embodiments of the present disclosure;
Fig. 6 is a structural block diagram of a field programmable gate array device according to one or more embodiments of the present disclosure;
Fig. 7 is a structural block diagram of a conventional heterogeneous database system according to one or more embodiments of the present disclosure;
Fig. 8 is a flowchart of a computational resource configuration method based on query load according to one or more embodiments of the present disclosure;
Fig. 9 is a schematic diagram of a computational resource configuration method based on query load according to one or more embodiments of the present disclosure.

### Detailed Description of the Embodiments

The embodiments of the present disclosure are described in detail below with reference to the accompanying drawings and in conjunction with embodiments.

It should be noted that the terms "first", "second" and the like in the specification and claims of the present disclosure and the above-mentioned drawings are used to distinguish similar objects, and are not necessarily used to describe a specific order or sequence.

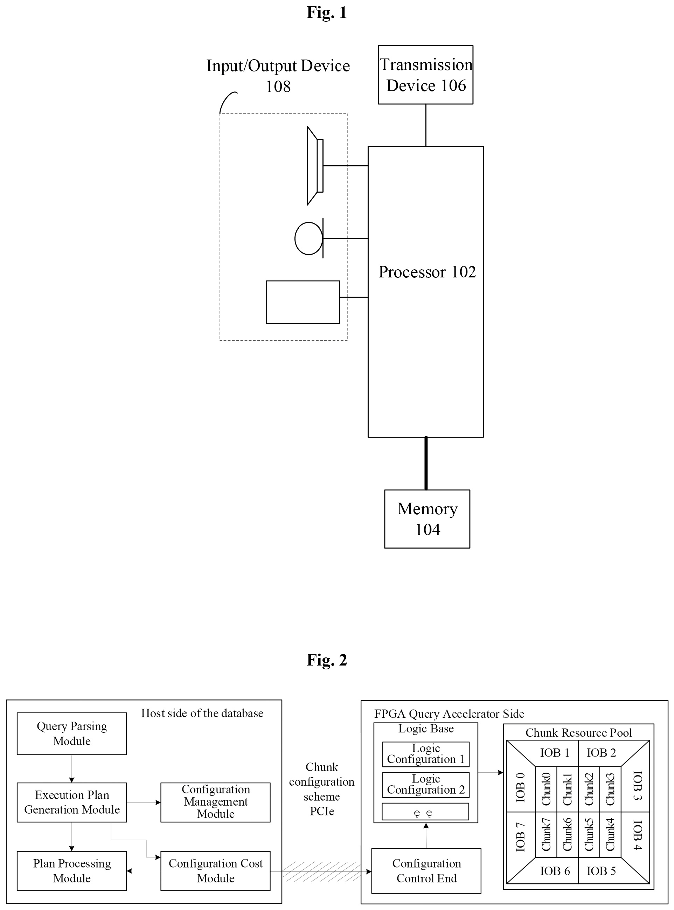

The method embodiments provided in the embodiments of the present disclosure may be executed in a computer terminal or a similar computing device. Taking the execution on a computer terminal as an example, Fig. 1 is a block diagram of a hardware structure of a computer terminal for running a computational resource configuration method for a field programmable gate array device according to one or more embodiments of the present disclosure. As shown in Fig. 1, the computer terminal may include one or more processors 102 (only one is shown in Fig. 1) (each of the one or more processors 102 may include, but is not limited to, a processing device such as a microprocessor or a programmable logic device) and a memory 104 for storing data. The computer terminal may further include a transmission device 106 for communication functions and an input/output device 108. Those of ordinary skill in the art can understand that the structure shown in Fig. 1 is merely illustrative and does not limit the structure of the computer terminal. For example, the computer terminal may also include more or fewer components than those shown in Fig. 1, or have a different configuration from that shown in Fig. 1.

The memory 104 may be used to store a computer program, for example, software programs and modules of application software, such as the computer program corresponding to the computational resource configuration method for a field programmable gate array device in the embodiments of the present disclosure. The one or more processors 102 execute various functional applications and data processing, that is, implements the method described above, by running the computer program stored in the memory 104. The memory 104 may include a high-speed random access memory, and may also include a non-volatile memory, such as one or more magnetic storage devices, flash memories, or other non-volatile solid-state memories. In some examples, the memory 104 may further include a memory located remotely relative to the one or more processors 102. The remote memory may be connected to the computer terminal via a network. Examples of the above-mentioned network include, but are not limited to, the Internet, an intranet, a local area network, a mobile communication network, and a combination thereof.

The transmission device 106 is used for receiving or transmitting data via a network. Specific examples of the network may include a wireless network provided by a communication supplier of the computer terminal. In an example, the transmission device 106 includes a Network Interface Controller (NIC), which may be connected to other network devices through a base station to communicate with the Internet. In an example, the transmission device 106 may be a Radio Frequency (RF) module, which is used for communicating with the Internet wirelessly.

The embodiments of the present disclosure also provide a heterogeneous database system. Fig. 2 is a structural block diagram of a heterogeneous database system according to one or more embodiments of the present disclosure. As shown in Fig. 2, the heterogeneous database system includes two parts: a host side of the database (hereinafter also referred to as the host side) and an FPGA query accelerator side (hereinafter also referred to as the FPGA side). Communication between the two parts is performed via a Peripheral Component Interconnect Express (PCIe) bus.

The host side of the database includes five modules: a query parsing module, an execution plan generation module, a plan processing module, a configuration management module, and a (configuration) cost analysis module. The query parsing module, the execution plan generation module, and the plan processing module all belong to the query processing engine of the original database, and are responsible for parsing a query request input by a user, generating an optimal query execution plan, and advancing the query processing according to the query execution plan, respectively.

The execution plan generation module is also configured to output a heterogeneous execution plan, which contains one or more heterogeneous query operators that need to be processed by the FPGA query accelerator.

The plan processing module is configured to process non-heterogeneous query operators, while the heterogeneous query operators are handed over to the FPGA query accelerator.

The configuration management module is configured to, when implementing a chunk-based dynamic configuration mechanism based on query load, analyze the query processing throughput of the host side, i.e., the number of working threads used for query processing at the host side, and provide a computational logic configuration scale for the FPGA query accelerator side. The computational logic configuration scale is the number of chunks required for executing the heterogeneous operator, so that the computational throughput of the FPGA query accelerator side can match the query throughput of the host side of the database, thereby avoiding excessively high or low usage of FPGA on-board resources and ensuring reasonable resource utilization.

The configuration cost analysis module is configured to analyze whether the chunk-based dynamic configuration based on query load will cause additional query waiting, i.e., additional time overhead. If the time for the query to wait for successful configuration is greater than the benefit of the FPGA-accelerated operator, then such configuration may result in a negative effect, and the configuration should be abandoned, and the heterogeneous operator should be handed over to the CPU for processing; otherwise, the chunk-based configuration task is sent to the FPGA query accelerator side.

The FPGA device on the FPGA query accelerator side includes three modules: a chunk resource pool, a logic base, and a configuration control end.

The chunk resource pool is configured to divide reconfigurable on-board computational resources in the FPGA query accelerator into a plurality of chunks, enabling the FPGA query accelerator to handle the maximum data capability.

As shown in Fig. 2, an FPGA device contains a plurality of Input/Output Blocks (IOBs), which are used for interaction between the FPGA query accelerator and the host side. Compared to the abundant computational resources, the I/O resources in the FPGA are relatively limited. Therefore, the on-board computational resources in the FPGA are uniformly divided into a plurality of chunks according to the number of IOBs. Each chunk, together with the adjacent IOBs, forms a configurable logic unit for implementing a specific computational logic.

The logic base is configured to store different kinds of logic configuration schemes in the on-board flash memory, so that the computational logic can be quickly configured onto the chunks.

The configuration control end is configured to, upon receiving a configuration request from the host side of the database, find idle chunks and complete the corresponding computational logic configuration, enabling these chunks to process the corresponding heterogeneous query operators.

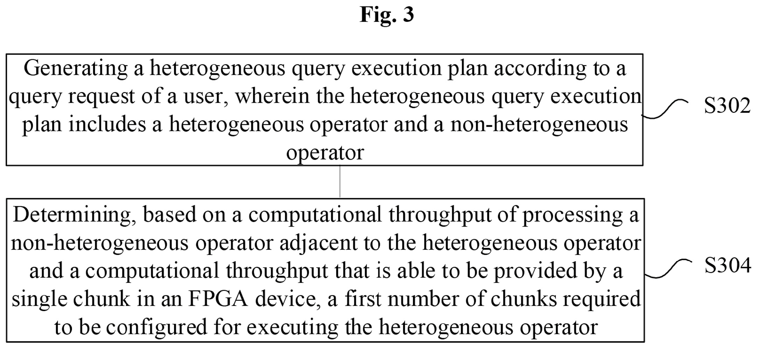

The embodiments of the present disclosure also provide a computational resource configuration method for a field programmable gate array device running on the aforementioned heterogeneous database system. In this embodiment, the method is applied to the host side of the database. Fig. 3 is a flowchart of the computational resource configuration method for a field programmable gate array device according to one or more embodiments of the present disclosure. As shown in Fig. 3, the flow includes the following operations S302 and S304.

In operation S302, a heterogeneous query execution plan is generated according to a query request of a user, wherein the heterogeneous query execution plan includes a heterogeneous operator and a non-heterogeneous operator.

In operation S302 of this embodiment, the operation of generating the heterogeneous query execution plan according to the query request of the user includes: converting the query request into a corresponding query algebraic expression; and generating the heterogeneous query execution plan based on the query algebraic expression.

The query request may include a Structured Query Language (SQL) request.

In this embodiment, the query parsing module at the host side sends the converted query algebraic expression to the execution plan generation module, so that the execution plan generation module generates the heterogeneous query plan. The heterogeneous query plan includes the heterogeneous operator and the non-heterogeneous operator. The heterogeneous operator will be handed over to the FPGA side of the database for processing, while the non-heterogeneous operator is executed at the host side.

In an embodiment, a fixed number of threads are allocated at the host side to execute the non-heterogeneous operator.

In operation S304, a first number of chunks required to be configured for executing the heterogeneous operator is determined based on a computational throughput of processing the non-heterogeneous operator adjacent to the heterogeneous operator and a computational throughput that is able to be provided by a single chunk in an FPGA device.

In this embodiment, the host side and the FPGA side are configured with matched resources, respectively, to ensure the processing progress of both sides is the same, thereby avoiding excessively high or low usage of FPGA on-board resources and ensuring reasonable resource utilization. Therefore, the number of chunks required to be configured for executing the heterogeneous operator needs to be determined based on the computational throughput of processing the aforementioned non-heterogeneous operator, wherein the computational throughput of processing the non-heterogeneous operator represents the resources required by the host side.

After operation S304 in this embodiment, the method further includes the following operations: determining, based on the first number and a time required for configuring a single chunk, a configuration time required to complete configuration of all the chunks for executing the heterogeneous operator on the FPGA device; and determining that the configuration time affects timely execution of the heterogeneous operator in a case where the configuration time is greater than a total execution time of all predecessor operators of the heterogeneous operator.

In an embodiment, wherein in a case where the configuration time affects the timely execution of the heterogeneous operator, the computational resource configuration method further includes the following operations: determining a first time required for executing the heterogeneous operator on the host side and a second time required for executing the heterogeneous operator on the FPGA device; and in a case where a difference value between the second time and the first time is greater than or equal to a difference value between the configuration time and the total execution time, encapsulating the heterogeneous operator and the first number into an acceleration task and sending the acceleration task to the FPGA device.

In operation S304 of this embodiment, the operation of determining the first number of the chunks required to be configured for executing the heterogeneous operator includes: in a case where a second number of chunks having a same computing logic as that for the heterogeneous operator have been configured on the FPGA device, additionally configuring only a third number of chunks on the FPGA device, wherein a value of the third number is equal to a difference value between the first number and the second number.

Through the above operations, the number of chunks required to be configured for the FPGA side to execute the heterogeneous operator takes into account the computational throughput of processing the non-heterogeneous operator and the computational throughput that is able to be provided by a single chunk in the FPGA device. The computational throughput of processing the non-heterogeneous operator represents the resources required by the host side. In this way, the resources configured for the host side of the database and the FPGA side can be matched, thereby avoiding excessively high or low usage of FPGA on-board resources and ensuring reasonable resource utilization. Moreover, based on the computational throughput that is able to be provided by a single chunk in the FPGA device, the scale of computational logic for processing the heterogeneous operator can be flexibly adjusted according to demand, avoiding insufficient resource usage or problems due to resource constraints. Therefore, the problem in the current dynamic configuration schemes in the related art, where the throughput of the FPGA device does not match the computational throughput of the CPU, resulting in the failure to rationally utilize the resources of the FPGA device, can be solved, thereby achieving the effect of ensuring rational utilization of FPGA device resources during the query acceleration process in the database.

The embodiments of the present disclosure also provide a computational resource configuration method for a field programmable gate array device running on the aforementioned heterogeneous database system. In this embodiment, the method is applied to the FPGA side of the database.

In an embodiment, there is exactly one FPGA query accelerator at the FPGA side of the database, which is connected to the host side of the database in the above-mentioned embodiments via a Peripheral Component Interconnect Express (PCIe) bus.

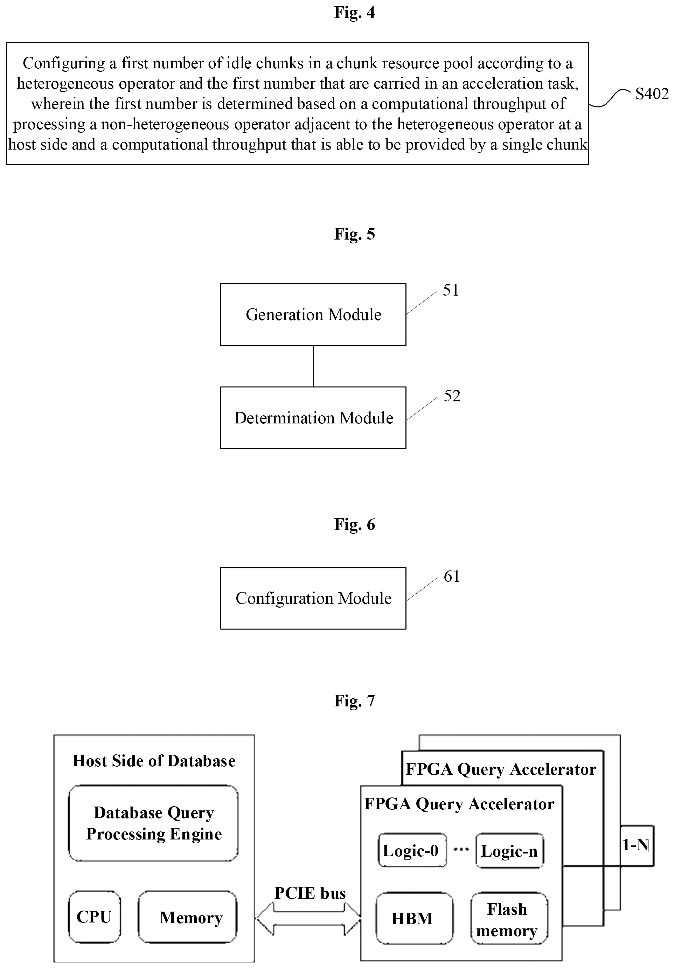

Fig. 4 is a flowchart of a computational resource configuration method for a field programmable gate array device according to one or more embodiments of the present disclosure. As shown in Fig. 4, the flow includes the following operation S402.

In operation S402, a first number of idle chunks are configured in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk.

Before operation S402 in this embodiment, the computational resource configuration method further includes an operation of dividing computational resources in the FPGA device into a plurality of chunks according to a number of input blocks or output blocks contained in the FPGA device.

After operation S402 in this embodiment, the computational resource configuration method further includes an operation of configuring logic codes corresponding to the heterogeneous operator in a logic base onto the idle chunks, so as to obtain logic chunks for executing the heterogeneous operator.

Through the description of the above implementation manners, those skilled in the art can clearly understand that the method according to the above embodiments may be implemented by means of software plus a necessary general hardware platform, and certainly may also be implemented by hardware, but in many cases the former is a better implementation manner. Based on such understanding, the technical solution of the present disclosure essentially, or the part contributing to the related art, may be embodied in the form of a software product. The computer software product is stored in a storage medium (such as ROM/RAM, magnetic disk, optical disc) and includes several instructions to enable a terminal device (which may be a computer, a server, or a network device, etc.) to execute the method described in each embodiment of the present disclosure.

The embodiments of the present disclosure also provide a computational resource configuration apparatus for a field programmable gate array device. The computational resource configuration apparatus is used to implement the above-mentioned embodiments and exemplary implementation manners, and descriptions that have been provided are not repeated. As used below, the term "module" may refer to a combination of software and/or hardware capable of implementing a predetermined function. Although the apparatus described in the following embodiments is preferably implemented by software, implementation by hardware, or a combination of software and hardware, is also possible and conceivable.

Fig. 5 is a structural block diagram of a computational resource configuration apparatus for a field programmable gate array device according to one or more embodiments of the present disclosure. As shown in Fig. 5, the computational resource configuration apparatus is located at a host side of a database and includes: a generation module 51 and a determination module 52.

The generation module 51 is configured to generate a heterogeneous query execution plan according to a query request of a user, wherein the heterogeneous query execution plan includes a heterogeneous operator and a non-heterogeneous operator. The generation module 51 corresponds in function to the execution plan generation module in the above-mentioned example.

The determination module 52 is configured to determine, based on a computational throughput of processing the non-heterogeneous operator adjacent to the heterogeneous operator and a computational throughput that is able to be provided by a single chunk in an FPGA device, a first number of chunks required to be configured for executing the heterogeneous operator. The determination module 52 corresponds in function to the configuration management module in the above-mentioned embodiment.

Fig. 6 is a structural block diagram of a field programmable gate array device according to one or more embodiments of the present disclosure. As shown in Fig. 6, the FPGA device includes:
a configuration module 61, configured to configure a first number of idle chunks in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk. The configuration module 61 corresponds in function to the configuration control end in the above-mentioned embodiment.

It should be noted that the above-mentioned modules may be implemented by software or hardware. For the latter, the modules may be implemented in, but not limited to, the following manner: the above-mentioned modules are all located in the same processor; or, the above-mentioned modules are respectively located in different processors in any combination.

To facilitate the understanding of the technical solution provided by the present disclosure, detailed explanations are given below in conjunction with exemplary application scenarios.

Introducing FPGA into a database can, to some extent, alleviate the computational pressure on the CPU side and extend the computational capability of the database system. An FPGA is a field programmable gate array device, which evolved from programmable devices like Programmable Array Logic (PAL). The FPGA possesses the programmability of CPU and Graphics Processing Unit (GPU) devices, as well as characteristics of Application Specific Integrated Circuit (ASIC) devices such as high density, large capacity, and low power consumption. Therefore, the FPGA is widely used in database systems as an efficient query accelerator.

However, in existing databases, the configuration and management methods for FPGA query accelerators are relatively simplistic, leading to either excessively low or high usage of the FPGA device's on-board resources, while also overlooking the time overhead associated with accelerator management configuration. In this regard, the embodiments of the present disclosure extend the management and configuration method for FPGA query accelerators in databases, enabling the extended management and configuration method to perform dynamic adjustment according to query load. This ensures rational utilization of FPGA device resources, incorporates consideration of configuration time, and thereby provides superior query acceleration performance.

To enable an FPGA query accelerator to support specific computational tasks, the FPGA query accelerator needs to be configured and managed according to specific schemes, which can be broadly categorized into static configuration schemes and dynamic configuration schemes. Fig. 7 is a structural block diagram of a conventional heterogeneous database system according to one or more embodiments of the present disclosure. As shown in Fig. 7, the FPGA query accelerator in the database system contains one or multiple FPGA query accelerators, which are introduced into the database system via a Peripheral Component Interconnect Express (PCIe) bus. The one or multiple FPGA query accelerators undertake computationally simple, high-parallelism tasks delegated by the CPU (e.g., sorting and joining operators in the database). After the FPGA query accelerator completes the computational task, the generated results need to be returned to the CPU processor for unified processing.

In a static configuration scheme, the FPGA accelerator is pre-loaded with multiple computational logics to support a fixed set of query operators in the database (e.g., aggregation operators and joining operators). In other words, once the FPGA query accelerator is introduced into the database system, the internal computational logic of the FPGA query accelerator remains unchanged. Each computational logic on the FPGA device occupies a fixed portion of on-board resources (e.g., Configurable Logic Blocks (CLBs), registers, etc.). Consequently, if a relational database employs only a single FPGA query accelerator, a large number of computational logics need to be implemented on that single FPGA device to adapt to different query scenarios. This results in each computational logic receiving only a small share of on-board resources, making it difficult to provide good acceleration performance. When a database employs multiple FPGA accelerators, a single FPGA device implements only one type of computational logic, allowing different query computation scenarios or different heterogeneous query operators to be handled directly by different FPGA devices. To meet ever-changing query scenarios, the heterogeneous database system would need to introduce a large number of FPGA devices, thereby increasing system costs.

A dynamic configuration strategy for managing a single FPGA device allows the FPGA accelerator to better adapt to different query scenarios. Under a dynamic configuration strategy, the operator or pipeline in a query that requires acceleration is converted into specific computational logic code (e.g., Verilog) and written to the FPGA query accelerator in real time. Once the computational logic is written, the corresponding query operator or pipeline can be handed over to the FPGA query accelerator for processing.

The embodiments of the present disclosure provide a load-aware-based dynamic configuration strategy for FPGA query accelerators. This dynamic configuration strategy is applied in the heterogeneous database system of Fig. 2, and performs resource dynamic configuration based on a chunk-based dynamic configuration mechanism driven by query load and a dynamic configuration cost model for query load.

As shown in Fig. 2, in this dynamic configuration strategy, the heterogeneous database system has exactly one FPGA query accelerator, which is connected to the database host via a PCIe bus, thus forming a CPU-FPGA heterogeneous database system.

Simultaneously, similar to a traditional database system, the query parsing module and the execution plan generation module both run on the host side of the database, and the generated execution plan should include execution cost estimations for each query operator (including data volume processed, execution time, and execution throughput). The difference is that, during the query processing in this embodiment, the database system "pushes down" some query operators to the FPGA query accelerator side, delegating the query operators to corresponding computational logic for processing. The FPGA query accelerator side should possess reconfigurable on-board resources to support dynamic reconfiguration of computational logic.

In this embodiment, the FPGA device also has relatively large High Bandwidth Memory (HBM) space and flash memory space, used for storing temporary data and logic codes, respectively.

This dynamic configuration strategy includes:
(1) A chunk-based dynamic configuration mechanism based on query load. The computational resources (Reconfigurable Resources) within a single FPGA device are divided into multiple chunks to ensure reasonable utilization of FPGA device resources. One chunk may serve as a processing unit within a computational logic and has a fixed computational throughput. When the throughput of the CPU at the host side of the database for processing the query load is known, this configuration mechanism can deduce the number of chunk-based processing units required on the FPGA side to match that throughput, and then configure a computational logic that matches the throughput, thereby achieving rational utilization of FPGA device resources. Under this chunk-based management granularity, the configuration strategy can also directly reuse existing idle and suitable chunk-based processing units (e.g., if an idle chunk exists, and that chunk was previously configured with a computational logic identical to the one currently needed, that chunk can be used directly). This reduces the scale of configuration, lowers configuration time, and thus minimizes the impact of configuration time on query performance.
(2) A dynamic configuration cost model based on query load analyzes the configuration time of the FPGA query accelerator and determines whether this configuration time will affect the timely processing of acceleration tasks, to avoid the time overhead of dynamic configuration causing negative net benefit for the query.

In cases where an acceleration task cannot be processed timely due to configuration time, the dynamic configuration cost model further analyzes whether the benefit gained from task acceleration can compensate for the additional waiting time, thereby further deciding whether the dynamic reconfiguration mechanism should be executed.

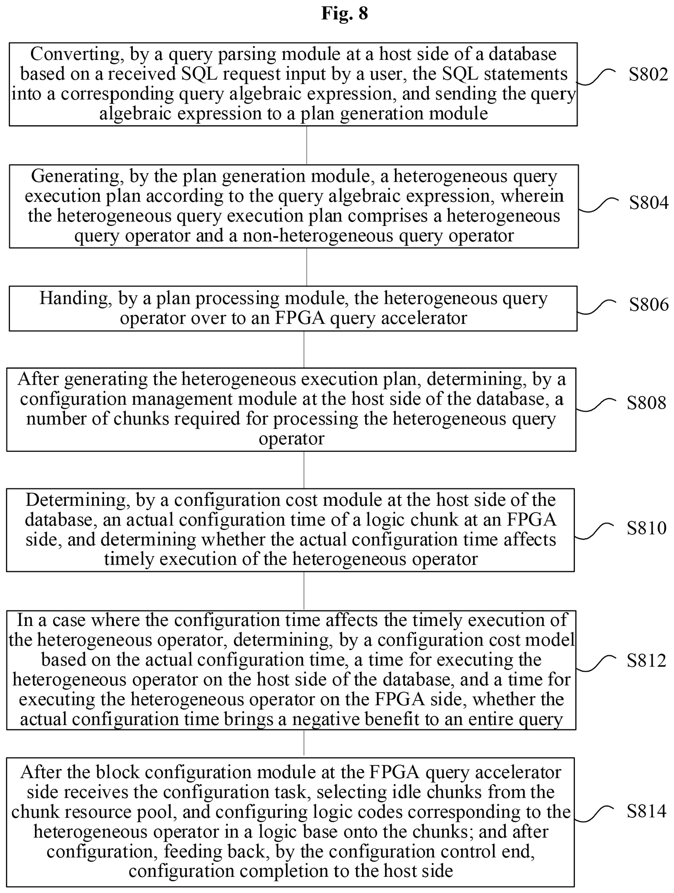

Fig. 8 is a flowchart of a computational resource configuration method based on query load according to one or more embodiments of the present disclosure. As shown in Fig. 8, the computational resource configuration method includes the following operations S802 to S814:
In operation S802, based on a received SQL request input by a user, the query parsing module at the host side of the database converts the SQL statement into a corresponding query algebraic expression and sends the query algebraic expression to the plan generation module.

In operation S804, the plan generation module generates a heterogeneous query execution plan according to the query algebraic expression. The query execution plan contains heterogeneous query operator(s) and non-heterogeneous query operator(s). Here, the heterogeneous query operator(s) correspond in function to the heterogeneous operator(s) mentioned in the above embodiments, and the non-heterogeneous query operator(s) correspond to the non-heterogeneous operator(s).

In operation S806, the plan processing module hands over the heterogeneous query operator(s) to the FPGA query accelerator for processing.

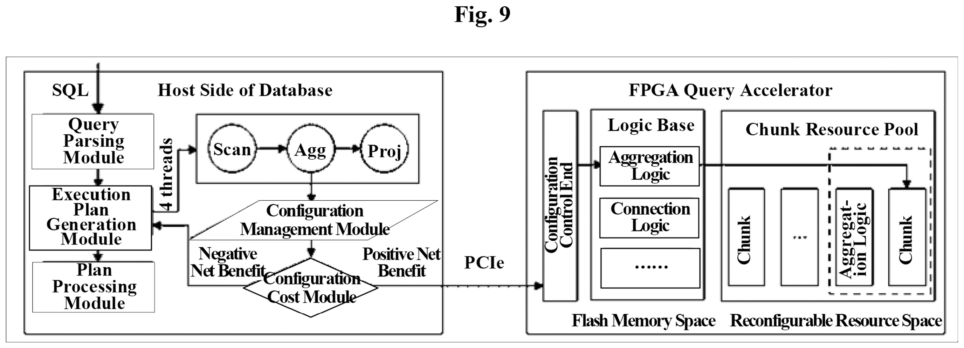

For example, in Fig. 9, the aggregation operator (Agg) is a heterogeneous query operator suitable for processing by the FPGA query accelerator, while Scan and Proj are non-heterogeneous query operators.

For the non-heterogeneous query operator(s), a fixed number of threads are allocated at the host side to execute the non-heterogeneous query operator(s). For instance, Scan and Proj are executed by 4 working threads.

In operation S808, after the heterogeneous execution plan is generated, the configuration management module at the host side of the database determines the number of chunks required for processing the heterogeneous query operator(s).

The number of chunks required for the heterogeneous query operator(s) is obtained by dividing the computational throughput of the adjacent non-heterogeneous operator(s) (e.g., scan or Proj) in the execution plan by the computational throughput that a single chunk on the FPGA side can provide.

Simultaneously, to ensure the processing progress is the same on both the host side of the database and the FPGA query accelerator side, the two sides need to maintain comparable resources. For example, as shown in Fig. 9, when the processing capacity of the host side is known to be 4 threads, the query computational logic on the FPGA side only needs to employ 2 chunks to provide comparable throughput. That is, the host-side throughput is twice that of a single FPGA chunk.

In this embodiment, to avoid the time overhead of dynamic configuration causing negative net benefit for the query, the host side of the database also analyzes the actual configuration scale of the FPGA query accelerator.

For instance, in Fig. 9, the FPGA query accelerator side already has 1 idle chunk configured with aggregation logic. Therefore, the accelerator actually only needs to configure aggregation logic for 1 additional chunk.

In operation S810, the configuration cost module at the host side of the database determines the actual configuration time of the logic chunks on the FPGA query accelerator side and judges whether this actual configuration time affects the timely execution of the heterogeneous operator(s).

To avoid the time overhead of dynamic configuration causing negative net benefit for the query, the configuration cost module at the host side of the database multiplies the number of logic chunks (i.e., chunks that have logic configured) that actually need to be configured by the configuration time of a single logic chunk, obtaining the actual configuration time T_r. If the actual configuration time T_r is greater than the total execution time T_s of all predecessor operators (e.g., scan) of that heterogeneous operator, it is considered that the configuration time affects the timely execution of the heterogeneous operator.

In operation S812, in a case where the configuration time affects the timely execution of the heterogeneous operator, the configuration cost model, based on the actual configuration time, the time for the host side of the database to execute the heterogeneous operator, and the time for the FPGA side to execute the heterogeneous operator, determines whether the actual configuration time brings a negative net benefit to the entire query.

The configuration cost model analyzes the time T_c for the host side of the database to execute the heterogeneous operator and the time T_f for the FPGA side to execute the heterogeneous operator. If the acceleration benefit (T_c - T_f) is less than the additional waiting time (T_r - T_s), it is considered that the configuration time brings a negative net benefit to the entire query, and the configuration should be abandoned; otherwise, the cost model deems that the heterogeneous operator and its corresponding actual configuration scale should be encapsulated into an acceleration task and sent to the FPGA query accelerator side.

In operation S814, after the block configuration module at the FPGA query accelerator side receives the configuration task, the block configuration module selects idle chunks from the chunk resource pool and configures the corresponding logic codes from the logic base onto the chunks. Upon completion of the configuration, the configuration control end feeds back the configuration completion to the host side.

Through the above embodiments of the present disclosure, the original FPGA-based query acceleration approach is extended. A query load-based dynamic configuration scheme is provided to ensure rational utilization of FPGA device resources during acceleration, and to minimize the impact of configuration time on query time, thereby improving query performance.

With the continuous emergence of cloud-native databases and the ongoing development of heterogeneous device virtualization technologies, the load-aware dynamic configuration strategy in the embodiments of the present disclosure can also be further applied to service scenarios of cloud databases.

The embodiments of the present disclosure also provide a computer-readable storage medium. The computer-readable storage medium stores a computer program, wherein the computer program, when being executed by a processor, causes the processor to implement the operations in any one of the method embodiments described above.

In an exemplary embodiment, the aforementioned computer-readable storage medium may include, but is not limited to, a U disk, a Read-Only Memory (ROM), a Random Access Memory (RAM), a mobile hard disk, a magnetic disk, an optical disc, or any other medium that can store a computer program.

The embodiments of the present disclosure also provide an electronic device, including a memory and a processor. The memory stores a computer program, and the processor is configured to run the computer program to implement the operations in any one of the method embodiments described above.

In an exemplary embodiment, the aforementioned electronic device may further include a transmission device and an input/output device, wherein the transmission device is connected to the processor, and the input/output device is connected to the processor.

The specific examples in this embodiment may refer to the examples described in the foregoing embodiments and exemplary implementations, and are not described again in this embodiment.

Obviously, those skilled in the art should understand that the above-mentioned modules or operations of the present disclosure can be implemented by a general-purpose computing device. The modules or operations can be concentrated on a single computing device or distributed over a network composed of multiple computing devices. The modules or operations can be implemented by program code executable by a computing device. Therefore, the program code can be stored in a storage device and executed by the computing device. Moreover, in some cases, the operations shown or described can be executed in an order different from the order described here, or they can be made into individual integrated circuit modules respectively, or multiple modules or operations among them can be made into a single integrated circuit module for implementation. Thus, the present disclosure is not limited to any specific combination of hardware and software.

The foregoing is only exemplary embodiments of the present disclosure and is not intended to limit the present disclosure. For those skilled in the art, the present disclosure may have various modifications and changes. Any modification, equivalent replacement, improvement, etc., made within the principles of the present disclosure shall fall within the protection scope of the present disclosure.

## Claims

1. A computational resource configuration method for a Field Programmable Gate Array, FPGA, device, wherein the computational resource configuration method is applied to a host side of a database and comprises:
generating a heterogeneous query execution plan according to a query request of a user, wherein the heterogeneous query execution plan comprises a heterogeneous operator and a non-heterogeneous operator; and
determining, based on a computational throughput of processing the non-heterogeneous operator adjacent to the heterogeneous operator and a computational throughput that is able to be provided by a single chunk in an FPGA device, a first number of chunks required to be configured for executing the heterogeneous operator.

2. The computational resource configuration method according to claim 1, wherein generating the heterogeneous query execution plan according to the query request of the user comprises:
converting the query request into a corresponding query algebraic expression; and
generating the heterogeneous query execution plan based on the query algebraic expression.

3. The computational resource configuration method according to claim 1, wherein after determining the first number of the chunks required to be configured for executing the heterogeneous operator, the computational resource configuration method further comprises:
determining, based on the first number and a time required for configuring a single chunk, a configuration time required to complete configuration of all the chunks for executing the heterogeneous operator on the FPGA device; and
determining that the configuration time affects timely execution of the heterogeneous operator in a case where the configuration time is greater than a total execution time of all predecessor operators of the heterogeneous operator.

4. The computational resource configuration method according to claim 3, wherein in a case where the configuration time affects the timely execution of the heterogeneous operator, the computational resource configuration method further comprises:
determining a first time required for executing the heterogeneous operator on the host side and a second time required for executing the heterogeneous operator on the FPGA device; and
in a case where a difference value between the second time and the first time is greater than or equal to a difference value between the configuration time and the total execution time, encapsulating the heterogeneous operator and the first number into an acceleration task and sending the acceleration task to the FPGA device.

5. The computational resource configuration method according to claim 1, wherein determining the first number of the chunks required to be configured for executing the heterogeneous operator comprises:
in a case where a second number of chunks having a same computing logic as that for the heterogeneous operator have been configured on the FPGA device, additionally configuring only a third number of chunks on the FPGA device, wherein a value of the third number is equal to a difference value between the first number and the second number.

6. A computational resource configuration method for a Field Programmable Gate Array, FPGA, device, wherein the computational resource configuration method is applied to an FPGA side of a database and comprises:
configuring a first number of idle chunks in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk.

7. The computational resource configuration method according to claim 6, wherein before configuring the first number of idle chunks in the chunk resource pool according to the heterogeneous operator and the first number that are carried in the acceleration task, the computational resource configuration method further comprises:
dividing computational resources in the FPGA device into a plurality of chunks according to a number of input blocks or output blocks contained in the FPGA device.

8. The computational resource configuration method according to claim 6, wherein after configuring the first number of idle chunks in the chunk resource pool, the computational resource configuration method further comprises:
configuring logic codes corresponding to the heterogeneous operator in a logic base onto the idle chunks, so as to obtain logic chunks for executing the heterogeneous operator.

9. A computational resource configuration apparatus for a Field Programmable Gate Array, FPGA, device, wherein the computational resource configuration apparatus is located at a host side of a database and comprises:
a generation module, configured to generate a heterogeneous query execution plan according to a query request of a user, wherein the heterogeneous query execution plan comprises a heterogeneous operator and a non-heterogeneous operator; and
a determination module, configured to determine, based on a computational throughput of processing the non-heterogeneous operator adjacent to the heterogeneous operator and a computational throughput that is able to be provided by a single chunk in an FPGA device, a first number of chunks required to be configured for executing the heterogeneous operator.

10. A Field Programmable Gate Array, FPGA, device, comprising:
a configuration module, configured to configure a first number of idle chunks in a chunk resource pool according to a heterogeneous operator and the first number that are carried in an acceleration task, wherein the first number is determined based on a computational throughput of processing a non-heterogeneous operator adjacent to the heterogeneous operator at a host side and a computational throughput that is able to be provided by a single chunk.

11. A computer-readable storage medium, wherein the computer-readable storage medium stores a computer program, and the computer program, when being executed by a processor, causes the processor to implement operations of the computational resource configuration method according to any one of claims 1 to 5, or operations of the computational resource configuration method according to any one of claims 6 to 8.

12. An electronic device, comprising a memory, a processor, and a computer program stored in the memory and executable on the processor, wherein the processor, when executing the computer program, implements operations of the computational resource configuration method according to any one of claims 1 to 5, or operations of the computational resource configuration method according to any one of claims 6 to 8.
